# FASCICULE DE BREVET EUROPEEN

(11) **EP 2 550 717 B1**
(45) Date de publication et mention de la délivrance du brevet: **04.01.2017**
(21) Numéro de dépôt: 11719296.3
(22) Date de dépôt: 23.03.2011
(51) Int. Cl.: G06Q 50/06, H02J 13/00, B60L 11/18, G07F 15/00, H05B 37/02, H02J 7/00

(54) **PROCEDE DE COMMANDE DE FOURNITURE DE COURANT A PARTIR D'UN RESEAU PUBLIC AFFECTE A L'ECLAIRAGE DE LA VOIE PUBLIQUE**
VERFAHREN ZUR STEUERUNG DER STROMVERSORGUNG EINES ÖFFENTLICHEN NETZES FÜR ÖFFENTLICHE STRASSENBELEUCHTUNG
METHOD FOR CONTROLLING THE SUPPLY OF CURRENT FROM A PUBLIC NETWORK USED FOR PUBLIC STREET LIGHTING

(30) Priorité: 23.03.2010 FR 1052097
(43) Date de publication de la demande: 30.01.2013
(73) Titulaire: Citelum, 75012 Paris (FR); Woodsys SAS, 33600 Pessac (FR)
(72) Inventeur: ASCHENBROICH, Marc, F-33610 Cestas (FR); KASSIS, Antoine, F-75015 Paris (FR)
(74) Mandataire: Potdevin, Emmanuel Eric
(86) Numéro de dépôt international: PCT/FR2011/050619
(87) Numéro de publication internationale: WO 2011/117541

(56) Documents cités:
- DE-A1-102007 038 245
- DE-U1- 9 307 580
- DE-U1-202007 011 309
- FR-A1- 2 750 807
- US-A1- 2009 287 578
- US-A1- 2010 013 436
- US-A1- 2010 283 426

## Description

L'invention concerne les réseaux d'éclairage de la voie publique.

Un intérêt particulier est porté actuellement au développement industriel des véhicules électriques. A cette fin, le déploiement à grande échelle des infrastructures de recharge constitue un élément clé qui conditionne l'autonomie des véhicules et favorise leur utilisation.

Nous entendons dans la présente demande par véhicule électrique tout engin de déplacement terrestre ou nautique fonctionnant en tout ou partie à l'énergie électrique et qui comprend un ou plusieurs organes électriques nécessitant d'être rechargé périodiquement. Il peut donc s'agir d'un véhicule automobile à deux ou quatre roues, tel qu'une voiture, un vélo à assistance électrique ou encore un scooter. Il peut aussi s'agir d'un navire. Les véhicules sont des véhicules de tourisme, des véhicules utilitaires ou des véhicules de transport en commun. Il peut s'agir d'un véhicule hybride doté d'un moteur électrique et d'un moteur thermique ou d'un véhicule tout électrique.

Les dispositifs de recharge peuvent être installés dans des espaces publics ou privés accessibles à ces véhicules. Parmi les techniques existantes, on connaît celle des bornes de recharge lente. Cette solution requiert une puissance relativement faible et permet l'utilisation de différents types de batterie qui ont peu d'effet mémoire et permettent donc d'effectuer des recharges courtes successives sans affecter leur durée de vie de façon significative. La faible distance parcourue en moyenne en milieu urbain et la durée du stationnement font que ce type de recharge est adapté aux déplacements en ville.

Il est connu, par exemple du document FR-2 890 476, de mettre en place sur la voirie des bornes de recharge.

Toutefois, cette solution présente quelques inconvénients :
- le coût des bornes en termes d'investissement et de maintenance ;
- leur vulnérabilité aux actes de vandalisme ;
- le coût du génie civil et du raccordement au réseau électrique ;
- la lourdeur des procédures ;
- l'importance des délais de mise en oeuvre;
- une souplesse réduite dans les implantations ;
- des nuisances liées aux importants travaux sur la voirie ; et
- un bilan global carbone et énergie des investissements incertain ou peu favorable.

On identifie également les documents DE 10 2007 038 245 A1 et US2010/013436 A1 qui concernent l'éclairage de la voie publique.

Un but de l'invention est de faciliter l'usage des véhicules électriques.

A cet effet, on prévoit selon l'invention un procédé de commande d'un réseau d'éclairage public affecté à l'éclairage de la voie publique, procédé dans lequel un organe, tel qu'un serveur, envoie sur un réseau de télécommunications au moins une commande de commutation d'un circuit d'alimentation d'une prise électrique à une source de courant du réseau, la prise appartenant au réseau d'éclairage et étant accessible depuis la voie publique, notamment depuis une partie extérieure d'un dispositif du réseau d'éclairage, tel qu'un dispositif d'éclairage

En effet, les réseau d'éclairage public offrent un parc très important de points lumineux raccordés au réseau de distribution d'énergie électrique, notamment au travers d'armoires électriques déjà installées. Chacune d'elles forme un ou plusieurs départs qui alimentent plusieurs dizaines d'organes d'éclairage. Cette infrastructure est donc dense et maillée de façon homogène sur l'espace urbain et notamment dans les zones traditionnelles de stationnement des véhicules en surface et dans les zones de circulation.

De plus, ce réseau est largement sous-utilisé aussi bien de jour, puisqu'il n'est pas alors sous tension, que de nuit car il est surdimensionné afin de supporter une phase d'allumage des lampes qui est cependant très courte et limitée à des heures prédéterminées. Il s'ensuit que la puissance du réseau est disponible à 100 % dans la journée et environ à 50 % la nuit hors phase d'allumage. A titre d'exemple, cette puissance disponible atteint environ 60 mégawatts pour une ville de deux millions d'habitants comme Paris.

L'invention permet donc de recharger des véhicules électriques à partir d'un réseau d'éclairage. On dispose ainsi de jour comme de nuit d'un réseau dense de points de recharge pour les véhicules, qui permet de faciliter et d'encourager leur usage.

Plus précisément, dans le cadre de l'invention, des prises électriques du réseau d'éclairage sont accessibles depuis la voie publique et on commute au réseau d'alimentation telle ou telle d'entre elles en fonction des circonstances et des besoin de recharge des véhicules, et ce sans qu'il faille a priori impacter l'éclairage produit par le réseau.

La prise, tout en étant accessible depuis l'extérieur du dispositif, pourra être protégée des intempéries, des salissures et des chocs, par exemple au moyen d'un capot articulé.

Avantageusement, l'organe identifie la prise parmi un ensemble de prises électriques accessibles depuis la voie publique et appartenant au réseau d'éclairage.

La prise pourra être fixée sur un dispositif lui-même fixé sur le mat de l'organe.

L'organe de commande peut ainsi déterminer la prise électrique la plus adaptée en fonction des circonstances, notamment la localisation du véhicule candidat à la recharge.

De préférence, l'organe envoie sur le réseau de télécommunications une commande de commutation du circuit d'alimentation à la prise.

Ainsi, alors qu'on prévoyait plus haut la commutation du circuit d'alimentation de la prise électrique à la source de courant, on commute cette fois le circuit à la prise. La commutation de la prise au réseau d'alimentation s'effectue donc en deux temps. Par exemple, la première commutation a lieu avant qu'un utilisateur ait requis la recharge d'un véhicule, en préparation d'une telle éventualité, tandis que la seconde a lieu après cette requête.

Avantageusement, l'organe émet sur le réseau de télécommunications ou un autre réseau de télécommunications une donnée relative à une localisation de la prise.

On indique ainsi à l'utilisateur où se trouve la prise qui pourra lui servir à la recharge.

Avantageusement, le dispositif étant un dispositif d'éclairage, l'organe commande une valeur de puissance à rendre disponible sur la prise en fonction d'une valeur de puissance prédéterminée affectée à l'éclairage dans le dispositif.

Ainsi, dans ce mode de réalisation, on adapte la puissance allouée par le réseau pour la recharge du ou des véhicules, en fonction de la puissance nécessitée par l'éclairage, afin d'optimiser cette dernière.

On peut aussi prévoir que l'organe commande une valeur de puissance affectée à l'éclairage dans le dispositif en fonction d'une valeur de puissance prédéterminée à rendre disponible sur la prise.

Ainsi, dans ce mode de réalisation, on adapte la puissance allouée par le réseau à l'éclairage en fonction de la puissance nécessitée par la recharge du ou des véhicules en charge, afin d'optimiser la puissance disponible sur le réseau.

De préférence, la prise étant une première prise, l'organe envoie sur le réseau de télécommunications une commande de décommutation, à l'égard de la source de courant du réseau, du circuit d'alimentation d'une deuxième prise électrique accessible depuis la voie publique et appartenant au réseau d'éclairage.

Cette commande suit par exemple la commutation du circuit d'alimentation de la première prise, afin de ne pas maintenir commutés au réseau un nombre trop élevé de circuits d'alimentation de prises.

Avantageusement, l'organe détermine une valeur de puissance globale affectée pour l'éclairage à un ensemble de dispositifs d'éclairage du réseau d'éclairage puis, en fonction de cette dernière, une valeur de puissance globale disponible sur la ou les prises.

On tient compte ainsi de l'énergie consacrée à l'éclairage sur le réseau d'éclairage, ou destinée à l'être, pour optimiser la part d'énergie résiduelle qui peut être rendue disponible pour la recharge des véhicules.

De préférence, la détermination a lieu plusieurs fois de façon itérative pendant une période inférieure à 12 heures.

Il s'agit ainsi notamment de tenir compte d'un début d'alimentation en courant effectuée à partir de la prise ou de l'une des prises et/ou de l'interruption d'une telle alimentation, ce début ou cette interruption intervenant entre deux mises en oeuvre de la détermination.

On peut donc actualiser la puissance disponible sur les prises sur la base des dernières informations relatives aux connexions et déconnexions dont certaines des prises ont fait l'objet, par exemple pour la recharge de véhicules ou l'interruption de cette dernière.

On prévoit aussi selon l'invention un organe de commande, tel qu'un serveur, d'un réseau d'éclairage public affecté à l'éclairage de la voie publique, l'organe étant apte à envoyer sur un réseau de télécommunications au moins une commande de commutation, à une source de courant du réseau, d'un circuit d'alimentation d'une prise électrique appartenant au réseau d'éclairage et accessible depuis la voie publique, notamment depuis une partie extérieure d'un dispositif du réseau d'éclairage, tel qu'un dispositif d'éclairage.

On prévoit également selon l'invention un réseau d'éclairage public affecté à l'éclairage de la voie publique, qui comprend au moins un organe de commande selon l'invention.

De préférence, le réseau d'éclairage comprend, pour le ou chaque dispositif du réseau, au moins un capteur apte à détecter une présence d'un véhicule à un emplacement prédéterminé associé à la prise.

On peut ainsi déterminer à distance si l'emplacement est occupé ou non, notamment pour déterminer si cette occupation est licite ou non, et mieux gérer le réseau en vue de la recharge des véhicules.

On prévoit également selon l'invention un programme d'ordinateur comprenant des instructions de code aptes à commander l'exécution des étapes d'un procédé selon l'invention lorsqu'il est exécuté sur un ordinateur. On prévoit également selon l'invention un support d'enregistrement de données comprenant un tel programme sous forme enregistrée. On prévoit enfin selon l'invention la mise à disposition d'un tel programme sur un réseau de télécommunications en vue de son téléchargement.

Nous allons décrire ci-après un mode de réalisation de l'invention à titre d'exemple non limitatif en référence aux dessins annexés sur lesquels :
- la figure 1 illustre différents éléments d'un système intervenant dans la mise en oeuvre du procédé de l'invention ;
- la figure 2 est un schéma montrant le principe de la commande de commutation d'une prise au réseau d'alimentation dans le système de la figure 1; et
- la figure 3 est une vue d'une rue montrant différents emplacements des prises.

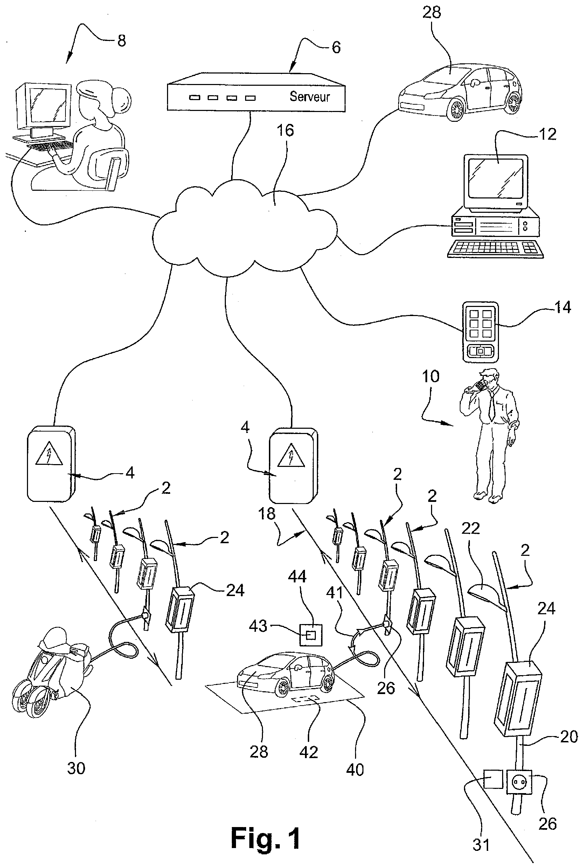

Nous avons illustré sur la figure 1 différents éléments d'un système intervenant lors de la mise en oeuvre du procédé de l'invention. Ces éléments, qui seront présentés plus loin en détail, sont brièvement les suivants :
- des organes d'éclairage 2 formant luminaires ;
- des armoires électriques 4 alimentant les organes 2 en courant électrique ;
- un dispositif informatique de commande tel qu'un serveur 6 ;
- un poste informatique 8 de gestion des éléments du système ;
- des moyens de communication sur un réseau de télécommunications, utilisables par un utilisateur 10. Ces moyens comprennent par exemple un ordinateur 12 et un téléphone cellulaire 14 ;
- un réseau d'éclairage 18 ; et
- un ou plusieurs réseaux 16 de télécommunications permettant l'échange de données et/ou de commandes entre ces différents éléments. Ces réseaux pourront comprendre notamment le réseau Internet, un ou plusieurs réseaux de téléphonie filaire ou par ondes hertziennes, un ou plusieurs réseaux d'alimentation en courant électrique et le réseau 18.

Les réseaux de téléphonie mobile dont il est question dans cette demande sont par exemple de type 2G, 3G, 3G+ ou encore forment un réseau de téléphonie par satellites.

Le réseau 18 est un réseau électrique public affecté à l'éclairage de la voie publique. Il n'est pas exclu que ce réseau contribue par ailleurs à l'éclairage d'une voie privée ou d'un domaine privé. Le réseau comprend les organes d'éclairage 2 qui sont, en groupe, connectés à une armoire électrique 4. Chaque organe 2 comprend un support ou mât 20 doté d'un pied et un luminaire 22 formant lampe fixé à ce support.

Chaque organe d'éclairage 2 comprend en l'espèce un module électronique 24 installé par exemple au niveau du luminaire ou à la base du support et commandant la puissance du courant électrique fourni à la lampe pour l'éclairage. Le module 24 commande notamment l'allumage du luminaire en début de nuit et son extinction en fin de nuit. On peut prévoir que le module 24 est apte à déterminer le niveau de puissance à délivrer à la lampe selon que la prise 26 est utilisée ou pas, en vue d'augmenter la puissance disponible pour la charge. Ainsi, on pourra augmenter la puissance disponible sur le réseau pour la charge de véhicules en modulant la puissance injectée dans les organes 2 grâce aux modules 24. Cela peut se faire de différentes manières:
- soit sur la base de scénarios préprogrammés (système non dynamique) Le module 24 est alors paramétré préalablement à son installation pour tenir compte d'un scénario de variation de puissance prédéfini ;
- soit en temps réel selon les contraintes appliquées au système, ce dernier devenant ainsi dynamique. Le module peut alors être commandé en temps réel à distance par le serveur 6 via les réseaux 16 et 18. Cette communication peut se faire par exemple au moyen de courants porteurs en ligne (CPL), d'ondes radio, etc.

Chacun des organes d'éclairage 2 comprend au moins une prise électrique 26 accessible depuis une partie extérieure de l'organe et depuis la voie publique (par exemple depuis la route, la rue, la chaussée ou le trottoir) pour la fourniture de courant électrique. On peut par ce moyen recharger un véhicule électrique 28 tel qu'une voiture automobile ou un engin à trois roues 30 tel qu'un scooter. Il suffit pour cela de relier par un câble électrique 41 un accumulateur de courant du véhicule à la prise 26. Dans une telle configuration, l'organe 2 fournit donc du courant électrique au véhicule pour la recharge de l'accumulateur.

En l'espèce, chaque prise 26 est fixée sur le mât de l'organe. S'il est nécessaire de modifier l'organe d'éclairage pour y implanter une telle prise, cette modification n'entraîne pas d'opération de génie civil, ni de raccordement à un réseau électrique. Une telle prise peut être déplacée sur un autre mât au besoin. Avantageusement, les prises 26 ont un emplacement identifié au sein du réseau 18 et sont dotées chacune d'une adresse IP (protocole Internet) qui leur est propre.

Un module 31 de commande de la prise est intégré à l'organe d'éclairage 2. Ce module est prévu et raccordé afin de pouvoir communiquer avec le serveur 6, l'armoire 4 et le véhicule 28, 30 durant la recharge et indirectement avec l'utilisateur 10. Ces communications peuvent se faire de différentes façons, notamment par courants porteurs en ligne, par ondes radio ou par un ou plusieurs réseaux de téléphonie mobile.

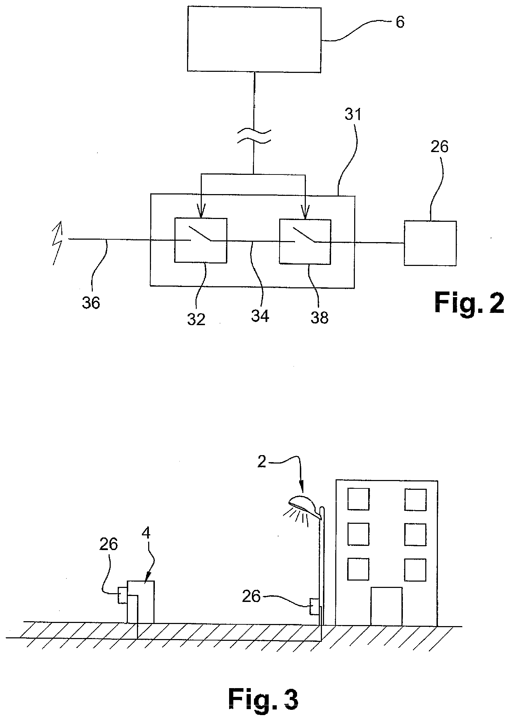

En référence à la figure 2, le module 31 permet de piloter à distance l'activation et la désactivation de la prise 26, en fonction notamment de la puissance disponible ou à rendre disponible sur le réseau.

Il comprend un premier commutateur 32 apte à commuter un circuit 34 d'alimentation de la prise 26 au réseau d'alimentation électrique 36 du réseau d'éclairage.

Il comprend aussi un second commutateur 38 apte à commuter le circuit d'alimentation 34 à la prise elle-même, ce second commutateur s'étendant en série avec le premier et étant interposé entre le premier commutateur et la prise.

Les deux commutateurs 32, 38 sont commandables à distance par le serveur 6 via l'un des réseaux de télécommunications.

Ainsi, le serveur peut envoyer une commande au premier commutateur 32 en vue de commuter le circuit d'alimentation 34 à la source de courant 36 du réseau.

Il peut aussi et ensuite envoyer au second commutateur 38 une commande visant à commuter le circuit d'alimentation 34 à la prise 26. Cette dernière est alors sous tension et peut servir pour la recharge d'un véhicule.

La commande du premier commutateur 32 est effectuée préalablement à une demande de recharge par un usager, en fonction de différents critères qui peuvent être parmi les suivants:
- selon que l'heure courante se situe le jour ou la nuit ;
- la puissance disponible sur le réseau d'éclairage ;
- des contraintes imposées au réseau ;
- des choix de gestion de la localité ;
- la proximité de la prise par rapport à une armoire d'alimentation 4, les prises qui en sont les plus proches étant commutées en priorité pour réduire les pertes en ligne ;
- des contraintes de circulation et de stationnement des véhicules; et
- l'historique du procédé mis en oeuvre par le système, en prévoyant ainsi une fonction d'apprentissage.

La commande du deuxième commutateur 38 résulte d'une demande de recharge adressée par un usager 10 et reçue par le serveur 6. La demande peut être émise au moyen du téléphone 14 ou d'une carte avec ou sans contact ou encore d'un objet communiquant tel qu'une clé USB, voire à partir du véhicule 28, 30 lui-même.

On dote chaque module 31 de moyens de sécurité tels qu'un disjoncteur qui peut sinon être intégré à la prise 26 ou à une autre partie de l'organe 2. On peut prévoir un organe de signalétique lumineux montrant l'état de la prise (état libre, état sous tension, état indisponible, ...). Le module 31 peut être doté d'un écran mais on peut aussi prévoir que les informations sont fournies directement à l'utilisateur sur l'écran de son téléphone 14 pour éviter de mettre en place en voirie des organes sensibles. On peut prévoir aussi que le module 31 et la ou les batteries 44 du véhicule entrent en communication via la prise 26 et le câble d'alimentation 41 en vue notamment d'adapter la charge.

On prévoit dans le présent mode de réalisation que le module 31 remplit une fonction de télémétrie consistant en une mesure ou un comptage permettant de rendre compte de la consommation d'énergie au niveau de la prise 26 durant la charge. Cette mesure est utile pour la facturation de l'automobiliste 10 et pour permettre le choix de l'opérateur si ce choix est prévu par la législation. La mesure effectuée est transmise au serveur 6 par des moyens adaptés de l'organe 2 de sorte que le serveur peut déterminer le nombre de kilowatt consommés durant la charge et les associer à un opérateur de fourniture de courant. Ainsi, les informations de télémétrie obtenues sont envoyées au serveur et peuvent servir dans certains cas comme assiette de facturation de l'usager 10. Grâce à la connaissance de la consommation d'énergie affectée en propre à la recharge du véhicule, les coûts respectifs associés à la recharge et à l'éclairage peuvent être ventilés, ce qui permet notamment que l'utilisateur 10 utilise un opérateur de fourniture de courant qui n'est pas celui opérant le réseau d'éclairage.

En variante, la fonction de télémétrie est remplie par le module 24 qui effectue un comptage de la consommation d'énergie par la lampe 22 et rend possible, par comparaison avec la consommation globale affectée aux organes 2 et mesurée au niveau de l'armoire 4 qui alimente ces organes, la connaissance de la consommation d'énergie au niveau de la prise 26 lorsque cette dernière sert à la recharge d'un véhicule.

Dans le présent exemple, à chaque organe d'éclairage 2 est associé un emplacement 40 sur la voirie pour le stationnement du véhicule durant la phase de recharge. Le réseau comprend pour chaque emplacement 40 au moins un capteur 42 apte à détecter la présence d'un véhicule sur l'emplacement. Le capteur peut être installé en surface sur la voirie en elle-même ou enfoui sous terre. On peut aussi prévoir de le fixer à l'organe 2. On peut choisir un capteur tel que la saisie de la présence du véhicule s'effectue sans contact (par exemple suivant un mode magnétique, électromagnétique, par radio, par laser, par ultrasons, etc.). Il peut s'agir d'un capteur autonome au plan énergétique grâce à un panneau photovoltaïque ou une pile électrique ou à l'inverse d'un capteur alimenté par le réseau d'éclairage. On peut prévoir que le capteur de présence permet de surcroît l'identification du véhicule par interaction avec un dispositif embarqué à cette fin à bord du véhicule et fixé à demeure à ce dernier. Il peut en variante s'agir d'un moyen d'identification associé à l'utilisateur 10 et porté par ce dernier.

Les capteurs 42 permettent au serveur 6 de savoir si la place de stationnement réservée à la recharge est occupée ou non, le cas échéant si elle l'est de façon illicite ou encore si elle l'est après la fin de la charge du véhicule. Si l'occupation est illicite, le serveur pourra en informer le gestionnaire du poste 8. Le capteur est apte à transmettre au serveur les informations sur le moment d'arrivée et le moment de départ du véhicule. L'organe 2 transmet quant à lui au serveur les informations sur le moment du début et le moment de fin de la charge. Le serveur peut par ce moyen prévenir l'usager de la fin de la charge. Le serveur pourra appliquer à ce dernier une tarification de stationnement conforme à la réglementation en vigueur. On peut prévoir que la place de stationnement est par ailleurs contrôlée au moyen d'un dispositif qui empêche l'occupation illicite de la place. Grâce à toutes ces fonctionnalités, le gestionnaire 8 peut donc, en interrogeant le serveur 6, savoir si le véhicule 28 est celui pour lequel a été demandée la connexion en vue de la recharge, savoir depuis combien de temps la charge est terminée le cas échéant, etc.

Les armoires de raccordement électrique 4 sont équipées de moyens de télécommunication avec le serveur 6, avec les organes 2 et en particulier leurs modules 31 et 34.

Au moyen de ce système, dans le procédé :
- le serveur 6 qui calcule à tout moment la puissance disponible identifie une ou plusieurs des prises 26 parmi l'ensemble des prises électriques du réseau d'éclairage ;
- le serveur envoie sur le réseau de télécommunications 16 une commande de commutation du circuit d'alimentation 34 de la ou chaque prise identifiée à la source de courant 36 ;
- sous l'effet de cette commande, le premier commutateur 32 de l'organe 2 visé commute à la source de courant 36 le circuit d'alimentation 34 ;
- le serveur reçoit d'un utilisateur 10 une donnée relative à une demande d'utilisation du réseau, notamment pour la recharge d'un véhicule 28, 30 ;
- le serveur détermine un organe d'éclairage 2 du réseau présentant une prise 26 utilisable, à savoir dont le commutateur connecte déjà le circuit 34 au réseau 36 ;
- le serveur envoie sur le réseau de télécommunications une commande de commutation du circuit d'alimentation 34 à la prise 36 ;
- sous l'effet de cette commande, le second commutateur 38 de l'organe visé commute le circuit d'alimentation 34 à la prise 26, mettant ainsi cette dernière sous tension ;
- le serveur émet à destination de l'utilisateur 10 une donnée relative à la localisation de cette prise dans le réseau ; et
- éventuellement, le serveur envoie sur le réseau de télécommunications une commande de décommutation, à l'égard de la source de courant du réseau, du circuit d'alimentation d'au moins une deuxième prise électrique d'un organe 2 afin de limiter la puissance disponible pour la recharge de véhicules.

On prévoit ici que l'utilisateur 10 s'inscrit au service permettant la recharge du véhicule par différents moyens à sa disposition tels qu'une connexion en ligne au serveur 6 via l'ordinateur 12 ou au moyen de son téléphone 14. Il peut choisir son opérateur d'électricité à cette occasion ou bien effectuer ce choix lors de la transaction pour l'achat de courant.

Le système est agencé de sorte que, lorsqu'un utilisateur adhérant au service recherche une prise pour recharger son véhicule, il se connecte au serveur 6 et ce dernier le guide vers la prise 26 la plus proche parmi celles qui sont aptes à lui fournir du courant. Pour cela, le serveur pourra prendre en compte un ou plusieurs des critères suivants :
- la distance la plus courte entre l'utilisateur et la prise ;
- le temps de parcours le plus court entre eux ;
- le parcours le moins consommateur d'énergie ;
- le tarif de recharge le plus avantageux ;
- la politique de déplacement de la zone où se situe le réseau ; et
- le choix de l'emplacement où il y a le moins de perte électrique sur le réseau.

Une fois que l'utilisateur 10 a installé son véhicule 28, 30 sur l'emplacement 40, il appelle le serveur 6 qui identifie l'utilisateur au moyen de son numéro de téléphone ou d'un code programmé préalablement par l'utilisateur sur son clavier. Le serveur a par ailleurs été informé par le capteur 42 que le véhicule se trouvait sur l'emplacement. L'utilisateur programme le temps de charge puis valide l'opération de charge.

Le téléphone peut permettre un paiement en ligne direct, y compris du stationnement. Différentes règles tarifaires pourront être applicables, y compris celles intégrant le coût du stationnement et une tarification spéciale en cas d'occupation de l'espace après la fin de la charge du véhicule.

Après la validation de la demande et du paiement, le serveur 6 ayant mis la prise sous tension, l'utilisateur relie le véhicule à la prise 26 et la charge du véhicule débute.

Lorsque la charge est terminée, l'utilisateur 10 en est informé sur son téléphone. On peut prévoir la visualisation d'une jauge virtuelle sur l'écran de ce dernier.

On peut aussi prévoir que l'utilisateur 10 transmet au serveur un certain nombre d'informations sur sa batterie 44 telles que le niveau de sa jauge 43 ou des caractéristiques de la batterie. Ces informations permettent au serveur d'estimer la durée de la charge à effectuer ainsi que le profil de la puissance à délivrer en fonction du temps, voire de choisir en fonction de cela la prise à utiliser pour la recharge et les prises à rendre indisponibles durant cette dernière. On prévoit avantageusement que chaque prise 26 peut délivrer au choix au moins deux niveaux de puissance non nuls.

A la fin de la charge, l'utilisateur 10 est informé du coût de la recharge et du coût du stationnement pendant et après la recharge selon la politique de la collectivité.

Le serveur 6 comprend des sous-ensembles fonctionnels en interaction les uns avec les autres.

Il comprend ainsi un sous-ensemble qui gère les adhérents 10 au système et un sous-ensemble qui gère les paiements.

Il comprend un sous-ensemble qui intègre les différents flux de contenus disponibles et en assure la diffusion au sein des applications sur les téléphones 14 des utilisateurs. Ce sous-ensemble gère également la sécurisation des échanges avec les terminaux mobiles, leur identification et leur authentification ainsi que leurs données de positionnement.

Il comprend un sous-ensemble commandant les modules 31.

Le serveur 6 comprend aussi un sous-ensemble formant un système d'informations géographiques permettant la gestion de la maintenance assistée par ordinateur des organes 2 et notamment de leurs composants qui induisent une augmentation de la consommation d'énergie.

Il comprend un sous-ensemble gérant le début et la fin de la charge suite aux commandes adressées par les utilisateurs 10.

Il comprend un sous-ensemble de gestion de la télémétrie et de la répartition des énergies suivant l'application.

Il comprend un sous-ensemble déterminant si les aires de stationnement 40 sont occupées de façon licite ou pas.

Le serveur comprend en outre un ensemble calculateur qui :
- détermine les implantations des prises 26 selon différents critères prédéterminés (plan de déplacement, aires de stationnement disponibles, état du trafic, ...) ;
- détermine le nombre de prises à installer, gère les recommandations de changement de lieu des prises par apprentissage des conditions d'utilisation et par intégration des modifications des plans de déplacement ou d'autres contraintes ;
- assure l'optimisation de la puissance disponible le jour et la nuit en privilégiant le service de l'éclairage et en modulant sa puissance selon les critères prévus ;
- gère la phase d'allumage des luminaires, phase brève en début de nuit au cours de laquelle aucune puissance n'est disponible pour la recharge des véhicules ;
- détermine les prises disponibles ou non selon la puissance disponible armoire par armoire en intégrant les prises en cours d'utilisation, les défauts des prises, les scénarios d'utilisation, et régule l'ensemble en cas d'appel trop fort de puissance ;
- alterne la mise à disposition des prises selon le temps d'occupation prévisible et programmé par les utilisateurs, par exemple le soir lorsque des résidents prévoient de rester jusqu'à une certaine heure. Les prises sont alors activées par le serveur selon un programme optimisant l'utilisation de la charge pour le groupe des véhicules branchés, au moyen d'une fonction de gestion de file d'attente afin que les véhicules soient alimentés en électricité suivant un certain ordre et non tous en même temps ;
- gère le guidage vers les prises disponibles selon des critères prédéterminés ;
- gère l'information du suivi de rechargement vers l'utilisateur.

Le serveur 6 comprend une base de données des utilisateurs ainsi qu'une base de données des organes du réseau, les armoires 4 et les organes d'éclairage 2 notamment.

Sur le réseau d'éclairage, durant la journée, les lampes 22 sont éteintes de sorte que 100 % de la puissance électrique sur le réseau est disponible pour la charge de véhicules. Le système est configuré pour que, dans la journée, c'est-à-dire aux heures du jour durant lesquelles l'éclairage n'a pas lieu, le réseau demeure sous tension et que les prises 26 puissent fournir du courant sans que cela nécessite l'allumage des lampes 22. Ensuite, la phase d'allumage des lampes utilise près de 100 % de la puissance disponible sur le réseau et ce par exemple pendant une quinzaine de minutes. Ensuite, pendant la nuit, l'éclairage consomme normalement environ 50 % de la puissance totale disponible sur le réseau de sorte que 50 % de cette puissance est disponible pour la recharge. Le réseau d'éclairage est donc sous tension quel que soit le moment du jour et de la nuit.

Les éléments du système assurant une fonction informatique tels que le serveur 6, les ordinateurs 12, les armoires 4, les téléphones 14 ou le poste 8 comprennent des organes classiques tels que microprocesseurs, mémoires, horloges et moyens de réception et d'émission de données sur le réseau 16.

L'invention forme ainsi un procédé qui gère la puissance disponible d'un réseau d'éclairage piloté selon un scénario donné, pour permettre la recharge de véhicules électriques. Ce procédé pilote de façon interactive ce réseau de prises en intégrant la puissance appelée par les prises en mode instantané et prédictif.

Le réseau 18 est sous tension et la puissance appelée pour l'éclairage peut elle-même varier par action du serveur 6, via le réseau 16, sur les modules 24.

Dans l'invention, le serveur 6 calcule à tout moment la puissance laissée disponible par l'éclairage pour alimenter les prises, les calculs se faisant en analysant les informations de télémétrie et de mesure transmises par exemple par les modules 24. On voit donc que le serveur travaille sous contraintes.

En fonction de la puissance disponible calculée pour chaque armoire 4 formant un départ 4, le serveur 6 met sous tension via le réseau 16 le circuit 34 d'un ou de plusieurs dispositifs 31 d'un même départ par pilotage du ou des commutateurs correspondants 32.

Dans un mode de réalisation, le nombre de dispositifs 31 mis sous tension pourra être plus élevé que dans d'autres modes grâce à la réduction, par le serveur 6, via les modules 24, de la puissance des lanternes 22. Cette réduction de puissance peut se faire selon un scenario prédéfini ou en temps réel.

Le choix des dispositifs 31 au niveau desquels le circuit 34 est mis sous tension est effectué par le serveur 6 selon un certain nombre de critères paramétrables parmi ceux indiqués plus haut.

Dans le cas général, la prise 26 est mise sous tension par activation du module 38 par le serveur 6 suite à deux événements ou plus, consécutifs, tels que:
1- Une demande de recharge adressée par un usager 10 via son téléphone 14 ou de tout autre moyen de commande ou via le poste 8, notamment pour la maintenance et le contrôle, la demande étant reçue par le serveur 6. La demande peut être émise au moyen d'une carte avec ou sans contact ou encore d'un objet communiquant tel qu'une clé USB, voire à partir du véhicule 28, 30 lui-même.
2- Une autorisation de charge transmise par le serveur 6 après vérification des conditions d'accès, de paiement et autre de l'utilisateur.

Dans certaines configurations, la prise 26 peut être mise sous tension par le serveur 6 uniquement par activation du premier commutateur 32, le deuxième commutateur 38 étant toujours en mode activé ou encore les commutateurs 32 et 38 formant dans cette configuration un seul module. Cela correspond à une utilisation en libre service.

Il est possible de prévoir l'activation via le seul serveur 6 notamment pour la maintenance et le contrôle.

Lorsqu'une voiture 28 est en charge, la puissance appelée est transmise via le réseau 16 au serveur 6 par la fonction de télémétrie ou de mesure du dispositif 31. Le serveur 6 calcule la puissance disponible qui varie selon la puissance de la batterie du véhicule et son état de charge et met sous tension des dispositifs 31 du même départ si de la puissance est encore disponible selon certains scénarios ou hors tension si la puissance disponible devient insuffisante. Cette mise hors tension s'effectue en désactivant le commutateur 38 d'un dispositif 31. Le serveur 6 peut activer et désactiver les prises afin de privilégier l'éclairage et répondre à une politique de gestion urbaine.

Le serveur 6 peut également moduler la connexion et la déconnexion de plusieurs prises connectées à des véhicules pour accroître le nombre de prises selon un certain nombre de scénarios et planifier des recharges sur une période importante, par exemple la nuit et gérer des files d'attentes.

Dans la procédure d'activation de recharge, l'utilisateur du véhicule 10 via son téléphone 14 ou dans d'autres moyens de réalisation, une clef, une carte ou un clavier du dispositif 31, entre des données relatives à son véhicule et le niveau de charge de sa batterie 44 indiqué par la jauge d'énergie 43 de cette dernière. En fonction de ces données remontées via le réseau 16, le serveur 6 peut calculer et prévoir la puissance appelée par la prise et réguler et prédire plus finement la puissance disponible par l'activation et la désactivation des autres dispositifs 31 sur un même départ. Dans un mode de réalisation, c'est le câble de recharge 41 qui peut transmettre ces données au serveur 6 via le réseau 16.

Dans le procédé, on actionne tous les départs de la même manière si bien que le serveur 6 a connaissance de tous les dispositifs 31 disponibles et activés ou non sur un ensemble de départs.

Les départs peuvent être gérés les uns indépendamment des autres et répondre à des contraintes de gestion urbaine.

De même, au travers des capteurs 42, le serveur 6 a connaissance de l'occupation des places correspondant à chacune des prises et pourra calculer les heures d'utilisation licites ou non. Cette connaissance au niveau du serveur 6 des prises 31 mise à disposition pour la charge par la mise sous tension du circuit 34, permet à l'utilisateur 10 conduisant son véhicule d'être informé via son téléphone 14 des prises mises à disposition en interrogeant le serveur 6.

Les caractéristique du véhicule (puissance, type de batteries) étant connues par le serveur 6 lors de l'abonnement et reconnues par l'appel passé au moyen du téléphone 14 ou entrées par utilisateur 10, et sachant que ce dernier peut ainsi communiquer le niveau de sa jauge d'énergie disponible dans la batterie au moment de la demande, le serveur 6 peut déduire l'autonomie en temps ou en km et indiquer à l'utilisateur la prise 31 la plus proche selon un certain nombre de critères (distance géographique, autonomie énergétique, temps) et dont la place 40 correspondant à la prise soit libre, information transmise, comme on l'a vu, au serveur 6 par le capteur 40.

Dans un mode de réalisation, on peut prévoir que le serveur 6, ou un organe auquel il est connecté, calcule la puissance électrique affectée globalement aux organes d'éclairages pour l'éclairage et en déduit la puissance électrique globalement disponible sur les prises pour la recharge. Il peut par exemple déterminer alors:
- le nombre de prises d'une puissance nominale prédéterminée qui peuvent être utilisées pour la recharge,
- leur localisation sur le réseau d'éclairage, et
- le temps d'utilisation possible de chacune des prises.

Pour déterminer la puissance disponible, il est avantageux que le serveur tienne compte également de la puissance déjà affectée à la recharge à partir des prises et/ou destinée à l'être. Pour cela, le serveur peut tenir compte des prévisions de charge des véhicules qui lui sont transmises par le réseau de communication ou qu'il détermine lui-même au moyen des données dont il dispose. Il tient compte notamment des durées d'utilisation prévues des prises. Si la durée de connexion à une prise se trouve limitée, notamment par une réglementation, par exemple à deux heures, le nombre de prises pouvant être rendues disponibles et leur localisation peuvent en être affectés. De plus, si dans de telles conditions, un usager souhaite une recharge limitée à une heure, cela influence aussi le nombre de prises disponibles et leur localisation.

De préférence, la détermination de la puissance disponible pour la recharge a lieu plusieurs fois de façon itérative pendant une période inférieure à 12 heures, et de préférence inférieure à une heure. On peut donc tenir compte d'un début d'alimentation en courant effectuée à partir de la prise ou de l'une des prises pour la recharge d'un véhicule et/ou de l'interruption d'une telle alimentation mettant fin à une telle recharge, ce début ou cette interruption intervenant entre deux mises en oeuvre de la détermination. Le calcul de la puissance affectée globalement à l'éclairage et le calcul de la puissance résiduelle disponible pour la recharge de véhicules sont donc réactualisés régulièrement pour tenir compte des connexions et des déconnexions des véhicules par les usagers.

De même, le serveur 6 peut déterminer un échéancier de mise en service des prises. Par exemple, des véhicules qui seraient raccordés en début de nuit et pour toute la nuit peuvent être rechargés de façon non simultanée, notamment en alternance ou de façon séquentielle. Par exemple, certains véhicules sont rechargés en début de nuit, d'autres en milieu de nuit, d'autres encore en fin de nuit.

Les prises du réseau d'éclairage peuvent être de puissances nominales différentes, par exemple 3 kW, 22 kW, etc.

Tout ou partie des étapes du procédé selon l'invention pourront être commandées au moyen d'un programme d'ordinateur enregistré au sein des éléments précités et comprenant des instructions de code aptes à effectuer cette commande. On pourra prévoir d'enregistrer un tel programme sur un support de données tel qu'un disque CD ou DVD, une mémoire flash ou un disque dur. On peut aussi prévoir de mettre ce programme à disposition sur un réseau de télécommunications tel que le réseau 16 en vue de son téléchargement sur l'un des éléments précités.

L'invention permet la recharge électrique à partir du réseau d'éclairage. Elle utilise et valorise ce réseau et lève les inconvénients des solutions connues jusqu'à présent. Elle permet de tirer parti de la puissance résiduelle laissée disponible par les organes d'éclairage, de jour comme de nuit hors phase d'allumage.

On peut prévoir qu'au moins une prise 26 du réseau d'éclairage n'est pas fixée à un des organes d'éclairage 2. Comme illustré à la figure 3, un tel organe peut par exemple être fixé à un mur d'un bâtiment et ne pas être doté d'un support reposant directement sur le sol. La prise 26 peut alors être fixée elle aussi au mur, à une hauteur la rendant accessible pour la recharge. Elle peut aussi être supportée directement par l'armoire 4 qui raccorde l'organe 2 au réseau. Les deux possibilités peuvent être mises en oeuvre simultanément comme illustré. Dans un tel cas, la ou chaque prise est raccordée à une boite de dérivation du réseau d'éclairage à laquelle l'organe 2 est aussi raccordé, en parallèle à la prise.

On peut prévoir que le module 24 transmet au serveur 6 des informations sur la disponibilité et la qualité du réseau, telles que l'évolution de la puissance réactive, l'équilibrage de phases ou la température surveillée.

Le réseau d'éclairage peut être prévu pour alimenter en courant des édicules et des éléments de mobilier urbain tels que des bornes de taxi, des kiosques à journaux, des arrêts de bus et des toilettes publiques.

Bien entendu, on pourra apporter à l'invention de nombreuses modifications sans sortir du cadre de celle-ci.

## Revendications

1. Procédé de commande d'un réseau d'éclairage public (18) affecté à l'éclairage de la voie publique, **caractérisé en ce qu'**un organe, tel qu'un serveur (6), envoie sur un réseau de télécommunications (16) au moins une commande de commutation d'un circuit d'alimentation (34) d'une prise électrique (26) à une source (36) de courant du réseau, la prise appartenant au réseau d'éclairage et étant accessible depuis la voie publique, notamment depuis une partie extérieure d'un dispositif (2) du réseau d'éclairage, tel qu'un dispositif d'éclairage.

2. Procédé selon la revendication précédente dans lequel l'organe (6) identifie la prise (26) parmi un ensemble de prises électriques accessibles depuis la voie publique et appartenant au réseau d'éclairage.

3. Procédé selon au moins l'une quelconque des revendications précédentes dans lequel l'organe (6) envoie sur le réseau de télécommunications une commande de commutation du circuit d'alimentation (34) à la prise (26).

4. Procédé selon au moins l'une quelconque des revendications précédentes dans lequel l'organe (6) émet sur le réseau de télécommunications (16) ou un autre réseau de télécommunications une donnée relative à une localisation de la prise (26).

5. Procédé selon au moins l'une quelconque des revendications précédentes dans lequel, le dispositif (2) étant un dispositif d'éclairage, l'organe (6) commande une valeur de puissance à rendre disponible sur la prise (26) en fonction d'une valeur de puissance prédéterminée affectée à l'éclairage dans le dispositif.

6. Procédé selon au moins l'une quelconque des revendications précédentes dans lequel, la prise étant une première prise, l'organe (6) envoie sur le réseau de télécommunications une commande de décommutation, à l'égard de la source de courant (36) du réseau, du circuit d'alimentation (34) d'une deuxième prise électrique accessible depuis la voie publique et appartenant au réseau d'éclairage.

7. Procédé selon au moins l'une quelconque des revendications précédentes dans lequel l'organe (6) détermine une valeur de puissance globale affectée pour l'éclairage à un ensemble des dispositifs d'éclairage du réseau d'éclairage, puis, en fonction de cette dernière, une valeur de puissance globale disponible sur la ou les prises.

8. Procédé selon la revendication précédente dans lequel la détermination a lieu plusieurs fois de façon itérative pendant une période inférieure à 12 heures, notamment pour tenir compte d'un début d'alimentation en courant effectuée à partir de la prise ou de l'une des prises et/ou de l'interruption d'une telle alimentation, ce début ou cette interruption intervenant entre deux mises en oeuvre de la détermination.

9. Organe de commande, tel qu'un serveur (6), d'un réseau d'éclairage public (18) affecté à l'éclairage de la voie publique, **caractérisé en ce qu'**il est apte à envoyer sur un réseau de télécommunications (16) au moins une commande de commutation, à une source de courant (36) du réseau, d'un circuit d'alimentation (34) d'une prise électrique (26) appartenant au réseau d'éclairage et accessible depuis la voie publique, notamment depuis une partie extérieure d'un dispositif (2) du réseau d'éclairage, tel qu'un dispositif d'éclairage.

10. Réseau d'éclairage public (18) affecté à l'éclairage de la voie publique, **caractérisé en ce qu'**il comprend au moins un organe de commande (6) selon la revendication précédente.

11. Réseau selon la revendication précédente qui comprend, pour le ou chaque dispositif (2) du réseau d'éclairage, au moins un capteur (42) apte à détecter une présence d'un véhicule (28, 30) à un emplacement prédéterminé (40) associé à la prise.

## Patentansprüche

1. Verfahren zur Steuerung eines öffentlichen Beleuchtungsnetzes (18), das der Beleuchtung der öffentlichen Straßen bzw. Wege zugewiesen ist, **dadurch gekennzeichnet, dass** ein Organ, wie ein Server (6), über ein Telekommunikationsnetz (16) mindestens einen Befehl zum Schalten einer Versorgungsschaltung (34) einer elektrischen Steckdose (26) an eine Stromquelle (36) des Netzes sendet, wobei die Steckdose dem Beleuchtungsnetz zugehörig ist und von den öffentlichen Straßen bzw. Wegen aus zugänglich ist, insbesondere von einem äußeren Teil einer Vorrichtung (2) des Beleuchtungsnetzes, wie eine Beleuchtungsvorrichtung.

2. Verfahren nach dem vorhergehenden Anspruch, bei dem das Organ (6) die Steckdose (26) aus einer Gesamtheit elektrischer Steckdosen identifiziert, die von den öffentlichen Straßen bzw. Wegen aus zugänglich und dem Beleuchtungsnetz zugehörig sind.

3. Verfahren nach mindestens einem der vorhergehenden Ansprüche, bei dem das Organ (6) über das Telekommunikationsnetz einen Befehl zum Schalten der Versorgungsschaltung (34) auf die Steckdose (26) sendet.

4. Verfahren nach mindestens einem der vorhergehenden Ansprüche, bei dem das Organ (6) über das Telekommunikationsnetz (16) oder ein anderes Telekommunikationsnetz ein Datenelement in Bezug auf eine Lokalisierung der Steckdose (26) sendet.

5. Verfahren nach mindestens einem der vorhergehenden Ansprüche, bei dem die Vorrichtung (2) eine Beleuchtungsvorrichtung ist, wobei das Organ (6) einen Wert für die Leistung, die an der Steckdose (26) zur Verfügung zu stellen ist, in Abhängigkeit von einem vorbestimmten Leistungswert, welcher der Beleuchtung in der Vorrichtung zugewiesen ist, steuert.

6. Verfahren nach mindestens einem der vorhergehenden Ansprüche, bei dem, da die Steckdose eine erste Steckdose ist, das Organ (6) über das Telekommunikationsnetz einen Befehl zum Abschalten, gegenüber der Stromquelle (36) des Netzes, der Versorgungsschaltung (34) einer zweiten elektrischen Steckdose, die von den öffentlichen Straßen bzw. Wegen zugänglich und dem Beleuchtungsnetz zugehörig ist, sendet.

7. Verfahren nach mindestens einem der vorhergehenden Ansprüche, bei dem das Organ (6) einen Wert für die Gesamtleistung bestimmt, die einer Gesamtheit von Beleuchtungsvorrichtungen des Beleuchtungsnetzes für die Beleuchtung zugewiesen ist, und dann in Abhängigkeit von dieser letzten einen Wert für die Gesamtleistung bestimmt, die an der oder den Steckdosen verfügbar ist.

8. Verfahren nach dem vorhergehenden Anspruch, bei dem die Bestimmung über einen Zeitraum von weniger als 12 Stunden mehrere Male wiederholt stattfindet, insbesondere um einen Beginn der Stromversorgung, der ausgehend von der Steckdose oder von einer der Steckdosen erfolgt, und/oder die Unterbrechung einer derartigen Versorgung zu berücksichtigen, wobei dieser Beginn oder diese Unterbrechung zwischen zwei Durchführungen der Bestimmung stattfindet.

9. Organ zum Steuern, wie ein Server (6), eines öffentlichen Beleuchtungsnetzes (18), das der Beleuchtung der öffentlichen Straßen bzw. Wege zugewiesen ist, **dadurch gekennzeichnet, dass** es dazu eingerichtet ist, über ein Telekommunikationsnetz (16) mindestens einen Befehl zum Schalten, an eine Stromquelle (36) des Netzes, einer Versorgungsschaltung (34) einer elektrischen Steckdose (26), die dem Beleuchtungsnetz zugehörig und von den öffentlichen Straßen bzw. Wegen zugänglich ist, zu senden, insbesondere von einem äußeren Teil einer Vorrichtung (2) des Beleuchtungsnetzes aus, wie eine Beleuchtungsvorrichtung.

10. Öffentliches Beleuchtungsnetz (18), das der Beleuchtung der öffentlichen Straßen bzw. Wege zugewiesen ist, **dadurch gekennzeichnet, dass** es mindestens ein Steuerorgan (6) nach dem vorhergehenden Anspruch umfasst.

11. Netz nach dem vorhergehenden Anspruch, das, für die oder jede Vorrichtung (2) des Beleuchtungsnetzes, mindestens einen Geber (42) umfasst, der für das Detektieren einer Gegenwart eines Fahrzeugs (28, 30) an einem vorbestimmten Standort (40), welcher der Steckdose zugeordnet ist, eingerichtet ist.

## Claims

1. Method of controlling a public lighting network (18) used for public street lighting, **characterised in that** a unit, such as a server (6), sends at least one switching command via a telecommunication network (16) to connect a supply circuit (34) of an electric socket (26) to a power source (36) of the network, the socket forming part of the lighting network and being accessible from the public street, in particular from an external part of a device (2) of the lighting network, such as a lighting device.

2. Method as claimed in the preceding claim, wherein the unit (6) identifies the socket (26) from a set of electric sockets accessible from the public street and forming part of the lighting network.

3. Method as claimed in at least one of the preceding claims, wherein the unit (6) sends a switching command via the telecommunication network to connect the supply circuit (34) to the socket (26).

4. Method as claimed in at least one of the preceding claims, wherein the unit (6) transmits data relating to a location of the socket (26) via the telecommunication network (16) or via another telecommunication network.

5. Method as claimed in at least one of the preceding claims, wherein, the device (2) being a lighting device, the unit (6) issues a command specifying a value of power to be made available at the socket (26) as a function of a predetermined power value allocated to the lighting system in the device.

6. Method as claimed in at least one of the preceding claims, wherein, the socket being a first socket, the unit (6) sends a command via the telecommunication network to the power source (36) of the network to disconnect from the supply circuit (34) a second electric socket accessible from the public street and forming part of the lighting network.

7. Method as claimed in at least one of the preceding claims, wherein the unit (6) determines an overall power value allocated for lighting purposes to a set of lighting devices of the network, then, as a function of the latter, an overall power value available at the socket or sockets.

8. Method as claimed in the preceding claim, wherein the determination process takes place several times on an iterative basis for a period of less than 12 hours, in particular to take account of a commencement of supplying power from the socket or one of the sockets and/or interruption of such a supply, this commencement or interruption taking place between two determination processes.

9. Control unit, such as a server (6), for a public lighting network (18) used for lighting the public street, **characterised in that** it is configured to send at least one switching command via a telecommunication network (16) to a power source (36) of the network to connect a supply circuit (34) of an electric socket (26) forming part of the lighting network and accessible from the public street, in particular from an external part of a device (2) of the lighting network, such as a lighting device.

10. Public lighting network (18) used for lighting the public street, **characterised in that** it comprises at least one control unit (6) as claimed in the preceding claim.

11. Network as claimed in the preceding claim comprising, for the or each device (2) of the lighting network, at least one sensor (42) configured to detect a presence of a vehicle (28, 30) at a predetermined location (40) associated with the socket.
